# DEMANDE DE BREVET EUROPEEN

(11) **EP 1 391 830 A1**
(43) Date de publication de la demande: **25.02.2004**
(21) Numéro de dépôt: 02405626.9
(22) Date de dépôt: 19.07.2002
(51) Int. Cl.: G06F 17/27

(54) **Système d'extraction d'informations dans un texte en langage naturel**

(71) Demandeur: Albert Inc. S.A., 1009 Pully (CH)
(72) Inventeur: Germain, Nicolas, 69100 Villeurbanne (FR)
(74) Mandataire: Ganguillet, Cyril

(57) **Abrégé**

Le procédé d'extraction effectue un codage des mots du texte en les comparant avec le contenu d'un lexique de mots outils (essentiellement articles, prépositions, conjonctions et auxiliaires verbaux), puis identifie des groupes nominaux en recherchant, parmi des sous-ensembles de la suite des mots codés ainsi obtenue, des groupes de mots codés répondant à des règles syntaxiques prédéfinies.

## Description

La présente invention concerne un système d'extraction d'informations dans un texte en langage naturel, en vue de sélectionner les mots ou les groupes de mots du texte qui décrivent le mieux les sujets abordés dans le texte. Ces mots ou groupes de mots sont appelés les "mots-clés" et sont notamment utilisables à des fins d'indexation du texte dans une base de données documentaire, en particulier pour le résumé automatique du texte, pour la catégorisation ou toute autre tentative de représentation de la connaissance.

Les systèmes d'extraction d'informations que l'on connaît et qui tentent d'atteindre ces objectifs utilisent des méthodes d'analyses de trois types :
- les méthodes d'analyse statistique qui tentent d'élire les mots du texte les plus représentatifs en comptant leurs fréquences d'apparition et en ne retenant que ceux dont la fréquence n'est ni trop faible, ni trop forte;
- les méthodes d'analyse à thesaurus qui fonctionnent d'après une représentation prédéfinie de la connaissance et qui sont basées sur la définition préalable d'un lexique structuré de référence appelé thesaurus. Cette définition est entièrement manuelle et doit être opérée dans chaque domaine de spécialités;
- les méthodes d'analyse à reconnaissance de motifs (patterns) qui fonctionnent à l'aide d'identifications statistiques de motifs (patterns).

Le fonctionnement comparatif de ces trois types de méthodes d'analyse va être illustré ci-après par l'analyse du texte suivant :
"«Cats», l'une des comédies musicales les plus longtemps à l'affiche, va tirer sa révérence après vingt et une années sur la scène londonienne. La dernière représentation de cette oeuvre d'Andrew Lloyd Webber aura lieu le 11 mai, jour de son 21e anniversaire, après quelque 9 000 représentations. L'annonce a été faite trois jours après la dernière représentation de «Starlight Express», la seconde comédie musicale la plus longtemps à l'affiche à Londres, après dix-huit années sur les planches.
La fin de «Cats» est un coup dur supplémentaire pour le quartier de Covent Garden, où sont regroupés la plupart des théâtres londoniens, et qui a souffert d'une forte baisse de fréquentation en 2001. Depuis 1981, année de son lancement, la comédie musicale a, depuis, été interprétée devant plus de 50 millions de spectateurs en 11 langues et dans 26 pays."
   (source Reuter)

### Fonctionnement des méthodes d'analyse statistique :

Si l'on considère leur approche de façon caricaturale, les méthodes d'analyse statistique comptent les mots du texte pour ne retenir que ceux dont la fréquence n'est ni trop faible ni trop forte en éliminant parfois les mots outils (articles, prépositions, conjonctions, auxiliaires verbaux), afin d'affiner les résultats. En ce qui concerne le texte proposé ci-dessus, les mots "moyennement" fréquents (sans prendre en considération les mots outils) sont alors :
affiche, années, Cats, comédie, dernière, été, longtemps, musicale et représentation.

Bien que le principal avantage des méthodes d'analyse statistique réside dans une grande simplicité algorithmique, leur principal désavantage réside en la faible pertinence des résultats. En effet, les mots "moyennement" fréquents d'un texte sont rarement les plus représentatifs. Ces méthodes peuvent toutefois donner de meilleurs résultats sur des textes plus longs que le texte d'exemple ci-dessus.

D'autre part, du fait que le texte est découpé en mots, c'est-à-dire en chaînes de caractères dont les délimiteurs sont des espaces, les liens sémantiques qui peuvent relier des mots entre eux, comme par exemple les mots "comédie" et "musicale", sont perdus.

### Fonctionnement des méthodes d'analyse à thesaurus :

Ces méthodes sont basées sur la définition préalable d'un lexique structuré de référence appelé thesaurus, cette définition étant, comme on l'a mentionné plus haut, entièrement manuelle et devant être opérée dans chaque domaine de spécialité.

Imaginons par exemple le thesaurus suivant :
spectacle → comédie (s) → dramatique
→ musicale → Cats
→ Les dix commandements
→ savante

Avec ce type de méthodes, il est toujours possible d'identifier les mots du texte source qui se retrouvent exactement sous la même forme dans le thesaurus. L'avantage de ces méthodes est que l'on peut être sûr que les mots identifiés correspondent à une réalité culturelle ou scientifique établie et répertoriée. D'autre part, il est possible de déduire un mot fédérateur comme "spectacle" qui ne fait pas partie du texte initial, mais qui le caractérise correctement. En revanche, l'inconvénient majeur de ces méthodes est qu'il faut perpétuellement mettre à jour le thesaurus pour qu'il conserve sa pertinence, ce qui entraîne des frais de maintenance importants. Un autre inconvénient important de ces méthodes réside dans le fait qu'un thesaurus constitué pour analyser des textes dans le domaine de la chimie ne pourra pas être utilisé pour des textes dans le domaine de l'électronique, par exemple. De plus, dans le cas où le thesaurus n'est pas exhaustif, certaines expressions qui peuvent être très pertinentes ne seront pas reconnues comme telles.

Fonctionnement des méthodes d'analyse à reconnaissance de motifs :

Les méthodes d'analyse à reconnaissance de motifs que l'on connaît sont des méthodes d'identification statistiques de motifs qui, bien qu'elles améliorent considérablement les méthodes d'analyse statistique mentionnées plus haut, en conservant la trace de l'appariement des mots, comme par exemple des termes "comédie" et "musicale" de l'exemple ci-dessus, ne permettent pas d'analyser de façon correcte des textes courts. En effet, les méthodes statistiques ont besoin de quantité pour fonctionner correctement.

Par exemple, les motifs-clés du texte d'exemple seront obtenus par comparaisons approximatives de séquences plus ou moins longues entre elles. Les mots outils (le, la, les, ...) ne comptent pas, et les séquences sont formées à partir d'un mot, plus ou moins trois mots :
Cats
Cats comédies
Cats comédies musicales
Cats comédies musicales longtemps
comédies
comédies musicales
comédies musicales longtemps
comédies musicales longtemps affiche
musicales
musicales longtemps
musicales longtemps affiche
musicales longtemps affiche tirer
etc...

Il suffit ensuite de regrouper les différentes séquences obtenues, par approximation sur la forme (par exemple « comédies » et « comédie »), et de compter les expressions combinées les plus fréquentes comme « comédies musicales ».

Le but de la présente invention est de proposer un système pour l'extraction d'informations dans un texte en langage naturel permettant de remédier aux inconvénients des méthodes d'analyses connues, en permettant notamment une analyse de bonne qualité de textes aussi bien courts que longs.

A cet effet, le système utilise une méthode d'analyse par identification de motifs (patterns) non pas statistique, mais syntaxique.

En résumé, le système proposé convertit les mots du texte en suite de catégories syntaxiques, puis confronte des sous-ensembles du texte avec des motifs syntaxiques prédéfinis, de façon à identifier des groupes nominaux sans préjuger de la valeur des mots qui composent ces groupes.

Ainsi, les mots « pomme de terre » ou « électronique de puissance » ne sont pas important par eux-mêmes, mais sont importants par rapport au texte où ils apparaissent. Dans un texte de nature générale « électronique de puissance » peut n'être qu'un exemple, pas un mot-clé du texte, mais sera probablement mot-clé dans un texte traitant des transistors. C'est le contexte qui fait le mot-clé, et le système selon la présente invention comporte en quelque sorte un analyseur de contextes syntaxiques. De même, le mot "porte" peut être reconnu comme nominal dans certains textes à cause de sa position par rapport aux autres mots du texte, ou simplement comme mot structurel dans d'autres textes.

Le système d'extraction selon l'invention évalue la fonction grammaticale des mots du texte à analyser à l'aide d'un lexique prédéfini contenant les quelques dizaines de mots outils propres à chaque langue et qui sont essentiellement les articles, les prépositions, les conjonctions et auxiliaires verbaux. La fonction des autres mots est ensuite déduite grâce à l'emplacement des seuls mots outils. Du fait que les mots outils d'un texte représentent couramment 40 à 50 % des mots de ce texte, ceux-ci sont donc toujours assez nombreux pour permettre l'évaluation des autres mots. Ensuite, seules les parties du texte dont la grammaire est identifiée comme mots-clés possibles sont retenues.

Les avantages du système d'extraction selon l'invention sont nombreux. On relèvera, en particulier, qu'aucune intervention humaine n'est nécessaire pour la détermination des mots-clés, que le système peut fonctionner pour des textes de langues diverses et que, mis à part le lexique des mots outils, il ne nécessite aucun autre lexique. De plus, du fait que la valeur sémantique et grammaticale des mots outils est fixe et n'évolue pratiquement jamais sur plusieurs décennies, la maintenance du lexique est des plus réduites. En revanche, la valeur des autres mots, que l'on peut appeler les mots d'usage (verbes, noms, adjectifs), évolue sans cesse dans le temps, en fonction des usages, de l'évolution des métiers ou des sciences, ou simplement en fonction de l'actualité. Du fait que le système de la présente invention ne présuppose rien sur la valeur des mots d'usage, il fonctionne de façon identique dans tous les domaines, littéraire, technique ou scientifique, alors que les systèmes qui utilisent les méthodes connues doivent toujours être enrichis avec des lexiques spécialisés, fabriqués bien souvent sur mesure.

D'autre part, contrairement aux systèmes utilisant des méthodes d'analyse statistique dans lesquelles la fréquence d'apparition des mots est un critère de sélection, ce qui suppose que le texte soit suffisamment long, le système selon l'invention n'accorde à la fréquence d'apparition des mots qu'une importance subalterne et fonctionne aussi bien pour des textes longs de plusieurs dizaines de pages que pour des textes courts de quelques lignes.

On va décrire ci-après, à titre d'exemple, un système d'extraction d'informations selon l'invention dans un texte en langage naturel, en se référant aux dessins, sur lesquels :

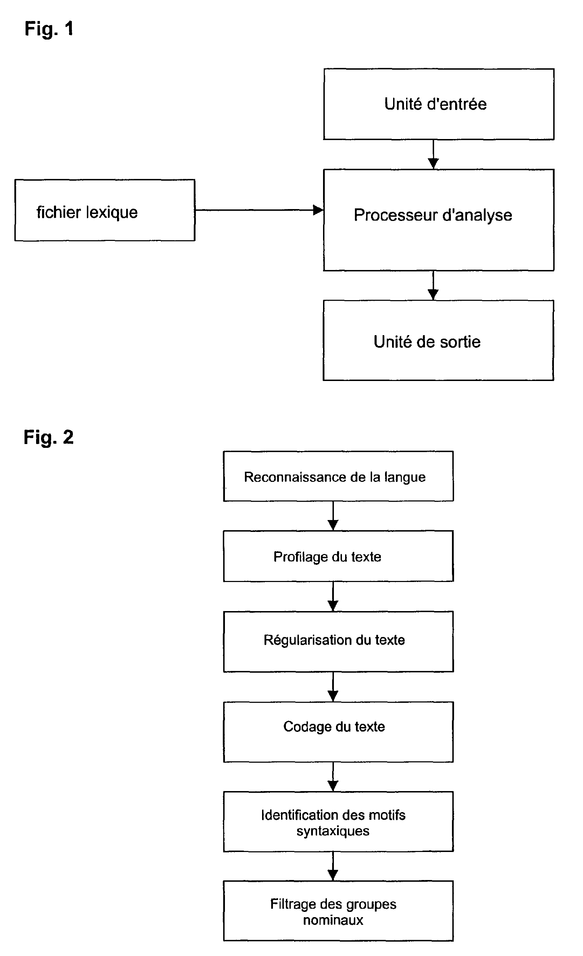

- la fig. 1 est un schéma-bloc du système d'extraction selon l'invention;
- la fig. 2 est un schéma-bloc des étapes d'un mode d'exécution du procédé selon l'invention.

L'utilisation d'un modèle syntaxique requiert de reconnaître la langue du texte analysé. C'est donc naturellement la première opération qu'effectue le système d'extraction selon l'invention. Cette reconnaissance de la langue peut être basée sur des critères purement statistiques de cooccurrence de lettres. La reconnaissance des langues, par exemple anglais, espagnol, français, portugais, allemand ou italien, permet d'orienter les analyses qui seront réalisées en aval.

L'étape suivante est une étape de profilage du texte qui permet d'identifier les lignes de texte (paragraphes) comportant une information linguistique, et d'opérer des regroupements de paragraphes. Cette opération est particulièrement utile pour les textes structurés (avec titres, sous-titres, etc.), car elle permet de regrouper des paragraphes de façon cohérente. Elle est inutile pour des textes courts.

L'étape suivante consiste en une opération de régularisation du texte au cours de laquelle il s'agit d'éliminer les amalgames de signes, comme par exemple séparer les caractères typographiques des caractères alphabétiques. Il sera par exemple utile de reconnaître la chaîne "mot," comme le terme "mot" suivit de ",", alors que la chaîne "1,5" devra être reconnue comme un nombre.

Dans le texte d'exemple, cette étape revient à séparer les caractères typographiques (", " , "'" et ".") des autres mots par des espaces blancs. Le texte d'exemple devient alors :
"« Cats» , l' une des comédies musicales les plus longtemps à l'affiche, va tirer sa révérence après vingt et une années sur la scène londonienne. La dernière représentation de cette oeuvre d'Andrew Lloyd Webber aura lieu le 11 mai, jour de son 21e anniversaire, après quelque 9 000 représentations. L ' annonce a été faite trois jours après la dernière représentation de « Starlight Express », la seconde comédie musicale la plus longtemps à l'affiche à Londres, après dix-huit années sur les planches.
   La fin de « Cats » est un coup dur supplémentaire pour le quartier de Covent Garden, où sont regroupés la plupart des théâtres londoniens, et qui a souffert d' une forte baisse de fréquentation en 2001 . Depuis 1981 , année de son lancement , la comédie musicale a, depuis, été interprétée devant plus de 50 millions de spectateurs en 11 langues et dans 26 pays. "

L'étape suivante, qui constitue une étape clé du système, consiste à déterminer la catégorie de chaque mot. Grâce au lexique restreint des mots outils, les mots du texte sont codés selon des catégories grammaticales attribuées en fonction de la valeur syntaxique des mots. Les mots outils du lexique sont dans un premier temps reconnus dans le texte, puis la fonction des autres mots du texte est déduite en fonction de leur emplacement par rapport aux mots outils déjà reconnus.

Ainsi, si l'on adopte par exemple les catégories suivantes :
s: mot de structure (mot outil non utile pour la suite de l'analyse)
d: déterminant (le, la, les, etc.)
p: préposition (de, en, par, etc.)
4: signe ouvrant ou fermant
1 ou 2 : ponctuation
3: apostrophe
N: nombre
W: nom propre
w: nom commun
c: amalgame (du, des, au, aux, ...)
a: anaphores (ce, cet, ces, ...)
*: code attribué si aucune des catégories précédentes n'est reconnue

Le texte d'exemple mentionné plus haut devient :
4 W 4 2 d 3 d c w3 w4 d w1w2 p d 3 w3 2 s w2 a w4 w2 w1p d w2 p d w2 w4 1d w3 w5 p a w2 p 3 W W W w2 w1 d N w1 2 w1 p a * w5 2 w2 d N N w5 1 d 3 w3 s w2 w2 d w1 w2 d w3 w5 p 4 W W 4 2 d w3 w3 w4 d w1 w2 p d 3 w3 p W2 w2 d 0 d w2 p d w2 1 d w1 p 4 W 4 s d w1 w1 w5 p d w2 p W W 2 s s w3 d w2 c w2 w3 2 p s s w2 p 3 d w2 w2 p w4 p N1 W N 2 w2 p a w3 2 d w3 w4 s 2 w2 2 w2 w4 w2 w1p N w2 p w3 p N w2 p p N w1 1

Une étape suivante consiste à identifier les structures linguistiques appelées syntagmes nominaux dans la terminologie linguistique ou, plus simplement, groupes nominaux.

L'ensemble des motifs syntaxiques qu'il est utile d'identifier constitue la grammaire d'analyse. Du fait que cette grammaire est commune à l'ensemble des langues romanes, il est possible d'analyser un grand nombre de langues en utilisant un même système d'extraction selon l'invention sans adaptation lourde.

A titre d'exemple, une grammaire (simplifiée) peut avoir la forme suivante :
(1) syntagme nominal -> déterminant , groupe nominal ; W.
(2) déterminant -> d ; d , 3 ; nombre ; c ; a
(3) d -> 'le' ; 'la' ; 'les' ; 'des' ; '1' ; etc...
(3bis) c -> 'du' ; 'au' ; 'aux' ; etc...
(3ter) a -> 'ce' ; 'cette' ; 'ces' ; 'son' ; etc...
(4) groupe nominal -> expression , groupe nominal .
(5) expression -> w , p , w ; w .
(6) p -> 'de' ; 'à' ; 'pour' ; 'sans' ; etc...

La flèche se dit « se réécrit », la virgule se dit « suivi de », le point-virgule exprime un « ou », le point marque la fin de la règle. La règle (1) se lit « syntagme nominal se réécrit déterminant suivi de groupe nominal ».

Les règles (3) et (6) sont dites règles terminales car elles font appels aux formes lexicales du lexique des mots outils.

La règle (4) est une règle récursive. Un groupe nominal peut donc contenir une infinité d'expressions, lesquelles, selon la règle (5) sont soit de type wpw, soit de type w.

Les suites de catégories grammaticales suivantes seront donc reconnues comme syntagme nominal :
d w
d w p w
d w w w
d w w p w
d 3 w w
etc...

Sur le texte d'exemple, les groupes nominaux identifiés à l'aide de cette grammaire ont été soulignés :
«Cats», l'une des comédies musicales les plus longtemps à l'affiche, va tirer sa révérence après vingt et une années sur la scène londonienne. La dernière représentation de cette oeuvre d'Andrew Lloyd Webber aura lieu le 11 mai, jour de son 21e anniversaire, après quelques 9 000 représentations. L'annonce a été faite trois jours après la dernière représentation de «Starlight Express», la seconde comédie musicale la plus longtemps à l'affiche à Londres, après dix-huit années sur les planches.
La fin de «Cats» est un coup dur supplémentaire pour le quartier de Covent Garden, où sont regroupés la plupart des théâtres londoniens, et qui a souffert d'une forte baisse de fréquentation en 2001. Depuis 1981, année de son lancement, la comédie musicale a, depuis, été interprétée devant plus de 50 millions de spectateurs en 11 langues et dans 26 pays.
   (source Reuter)

Comme les groupes nominaux représentent à peu près 50 % du texte, il est nécessaire de ne retenir que ceux dont la probabilité d'être de vrais mots-clés du texte est la plus forte.

Une étape suivante peut consister à filtrer les groupes nominaux. Tous les groupes nominaux n'ont pas la même capacité référentielle. Certains sont plus importants que d'autres. Pour déterminer quels sont les plus importants d'entre eux, le système selon l'invention valorise chaque groupe nominal en fonction d'un double critère, l'un statistique, l'autre syntaxique.

### Le critère statistique :

Les mots les plus fréquents des groupes nominaux sont classés par ordre de fréquence décroissant (en tenant compte d'une approximation comme 'comédie' = 'comédies'), soit dans le texte d'exemple :

| | |
|---|---|
| comédie | 3 |
| musicale | 3 |
| affiche | 2 |
| années | 2 |
| Cats | 2 |
| dernière | 2 |
| représentation | 2 |

Seuls les mots dont l'occurrence dépasse 1 sont conservés dans la liste. Les mots éliminés ont donc une valeur nulle. On ajoute à la valeur de chaque groupe nominal (initialement fixée à 0), la valeur de l'occurrence des mots qu'il contient moins 1. La valeur des groupes nominaux devient :

| | |
|---|---|
| comédie musicale | (3 - 1) + (3 - 1) = 4 |
| affiche | 2 - 1 = 1 |
| affiche à Londres | 2 - 1 = 1 |
| Cats | 2 - 1 = 1 |
| etc... | |

Le critère syntaxique :
Lorsque qu'un groupe nominal est ou comporte un nom propre, celui-ci prend un point de valeur supplémentaire, 0 sinon.

| | |
|---|---|
| comédie musicale | 4 + 0 = 4 |
| affiche | 1 + 0 = 1 |
| affiche à Londres | 1 + 1 = 2 |
| Cats | 1 + 1 = 2 |
| etc... | |

Avec cette valorisation, il est aisé de procéder au classement des groupes nominaux. Dans le texte d'exemple, les groupes nominaux perçus comme les plus importants sont soulignés deux fois, les groupes d'importance secondaire sont soulignés une fois, tandis que les autres ont été purement et simplement éliminés.

«Cats», l'une des comédies musicales les plus longtemps à l'affiche, va tirer sa révérence après vingt et une années sur la scène londonienne. La dernière représentation de cette oeuvre d'Andrew Lloyd Webber aura lieu le 11 mai, jour de son 21e anniversaire, après quelque 9 000 représentations. L'annonce a été faite trois jours après la dernière représentation de «Starlight Express», la seconde comédie musicale la plus longtemps à l'affiche à Londres, après dix-huit années sur les planches.

La fin de «Cats» est un coup dur supplémentaire pour le quartier de Covent Garden, où sont regroupés la plupart des théâtres londoniens, et qui a souffert d'une forte baisse de fréquentation en 2001. Depuis 1981, année de son lancement, la comédie musicale a, depuis, été interprétée devant plus de 50 millions de spectateurs en 11 langues et dans 26 pays.
(source Reuter)

## Revendications

1. Procédé d'extraction d'informations dans un texte en langage naturel, par identification de motifs (patterns), **caractérisé en ce que** l'on effectue un codage des mots du texte en les comparant avec le contenu d'un lexique prédéfini de mots outils, et **en ce que** l'on identifie ensuite des groupes nominaux en recherchant, parmi des sous-ensembles de la suite des mots codés ainsi obtenue, des groupes de mots codés répondant à des règles syntaxiques prédéfinies.

2. Procédé selon la revendication 1, **caractérisé en ce que** le codage des mots du texte s'effectue par évaluation de la fonction grammaticale de chaque mot en le comparant avec le contenu dudit lexique de mots outils, de façon à repérer les mots outils dans le texte et **en ce que** la fonction des mots d'usage, non reconnus comme mots outils, est déduite en comparant leur emplacement par rapport à l'emplacement des mots reconnus comme mots outils.

3. Procédé selon l'une des revendications 1 ou 2, **caractérisé en ce que** les groupes nominaux identifiés sont ensuite valorisés de façon à ne retenir que les groupes perçus comme les plus importants en utilisant des critères de valorisation prédéfinis.

4. Système d'extraction d'informations dans un texte en langage naturel, **caractérisé en ce qu'**il comprend :
- une unité d'entrée pour recevoir ledit texte en langage naturel,
- un fichier lexique dans lequel sont enregistrés des mots outils,
- un processeur d'analyse relié à ladite unité d'entrée, au fichier lexique et agencé pour effectuer dans un premier temps le codage des mots dudit texte en langage naturel par évaluation de la fonction grammaticale de chaque mot en le comparant avec le contenu dudit fichier lexique de mots outils, de façon d'une part à repérer les mots outils dans le texte et à évaluer la fonction des mots d'usage, non reconnus comme mots outils, en comparant leur emplacement par rapport à l'emplacement des mots reconnus comme mots outils, et dans un deuxième temps une recherche, parmi des sous-ensembles de la suite de mots codés obtenue, des groupes de mots codés répondant à des règles syntaxiques prédéfinies, de façon à identifier des groupes nominaux,
- une unité de sortie reliée audit processeur d'analyse pour recevoir les groupes de mots codés reconnus comme des motifs syntaxiques.

5. Système selon la revendication 4, **caractérisé en ce que** le processeur d'analyse comprend en outre des moyens de valorisation des groupes de mots codés retenus de façon à ne retenir que les groupes perçus comme les plus importants.

6. Système selon l'une des revendications 3 ou 4, **caractérisé en ce que** le processeur d'analyse comprend en outre des moyens de reconnaissance de la langue du texte reçu dans l'unité d'entrée.

7. Système selon l'une des revendications 4 à 6, **caractérisé en ce que** le processeur d'analyse comprend en outre des moyens de régularisation du texte reçu dans l'unité d'entrée de façon à éliminer les amalgames de signes.
